# EUROPEAN PATENT SPECIFICATION

(11) **EP 2 327 021 B1**
(45) Date of publication and mention of the grant of the patent: **18.02.2015**
(21) Application number: 09812374.8
(22) Date of filing: 08.09.2009
(51) Int. Cl.: H04L 12/70, G06F 15/16, H04L 12/931, H04L 12/701, H04L 12/713, H04L 12/723, H04L 12/939

(54) **METHOD AND APPARATUS FOR LINK SHARING AMONG LOGICAL ROUTERS**
VERFAHREN UND VORRICHTUNG ZUR LINK-WEITERGABE UNTER MOBILEN ROUTERN
PROCÉDÉ ET APPAREIL POUR LE PARTAGE DE LIAISON ENTRE DES ROUTEURS LOGIQUES

(30) Priority: 08.09.2008 US 206004
(43) Date of publication of application: 01.06.2011
(73) Proprietor: Verizon Patent and Licensing Inc., Basking Ridge, NJ 07920 (US)
(72) Inventor: DELREGNO, Christopher N., Rowlett Texas 75089 (US); KOTRLA, Scott R., Wylie Texas 75098 (US); TURLINGTON, Matthew W., Richardson Texas 75082 (US)
(74) Representative: Grünecker, Kinkeldey, Stockmair & Schwanhäusser
(86) International application number: PCT/US2009/056223
(87) International publication number: WO 2010/028364

(56) References cited:
- WO-A1-2008/093174
- US-A1- 2002 085 559
- US-A1- 2003 128 668
- US-A1- 2003 165 144
- US-A1- 2005 262 264
- US-A1- 2007 206 607
- US-B2- 7 304 944
- DAVIE F LE FAUCHEUR A NARAYANAN CISCO SYSTEMS B ET AL: "Support for RSVP in Layer 3 VPNs; draft-davie-tsvwg-rsvp-l3vpn-02.txt", 20080225, no. 2, 25 February 2008 (2008-02-25), XP015052756, ISSN: 0000-0004

## Description

### BACKGROUND INFORMATION

Modem communication networks are growing in size and complexity. As the number of consumers increases and services evolve in sophistication, the performance of these networks can degrade, in part, from link and pathway congestion. During information transport, link and pathway congestion customarily results in transmitted units of data (e.g., blocks, cells, frames, packets, etc.) becoming unevenly distributed over time, excessively queued, and discarded, thereby degrading the quality of network communications. Network devices, such as routers, play a key role in the rapid and successful transport of such information. One approach to ensuring quality is to deploy routers with more processing power and capacity; unfortunately, this approach can be cost prohibitive. Therefore, the concept of logical routers has been developed to permit the sharing of expensive hardware components. However, these logical routers, which behave independently, lack coordination with respect to the allocation of resources. Another factor contributing to cost is the development of new protocols and standards to accommodate new functionalities.

Document US 2002/008 5559 A1 discloses traffic routing and signalling in a connectionless communications network.

Document US 2003/0165 144 A1 discloses systems and methods for implementing virtual router.

Therefore, there is a need for an approach that provides for efficient link sharing among logical routers, while attempting to preserve compatibility with current protocols and standards.

### BRIEF DESCRIPTION OF THE DRAWINGS

Various exemplary embodiments are illustrated by way of example, and not by way of limitation, in the figures of the accompanying drawings in which like reference numerals refer to similar elements and in which:
FIGs. 1A and 1B are, respectively, a diagram of a system capable of providing link sharing among logical routers, and a diagram of a physical router implementing multiple logical routers, according to various exemplary embodiments;
FIG. 2 is a diagram of a router including multiple control planes utilizing a common forwarding plane, according to an exemplary embodiment;
FIG. 3 is a flowchart of a process for reserving bandwidth of a shared port among multiple logical routers, according to an exemplary embodiment;
FIG. 4 is a diagram of a traffic engineering database for storing unreserved bandwidth values, according to an exemplary embodiment;
FIG. 5 is a diagram of an exemplary routing system, according to an exemplary embodiment; and
FIG. 6 is a diagram of a computer system that can be used to implement various exemplary embodiments.

### DESCRIPTION OF THE PREFERRED EMBODIMENT

A preferred apparatus, method, and system for providing link sharing among logical routers are described. In the following description, for the purposes of explanation, numerous specific details are set forth in order to provide a thorough understanding of the preferred embodiments of the invention. It is apparent, however, that the preferred embodiments may be practiced without these specific details or with an equivalent arrangement. In other instances, well-known structures and devices are shown in block diagram form in order to avoid unnecessarily obscuring the preferred embodiments of the invention.

Although various exemplary embodiments are described with respect to a Multiprotocol Label Switching (MPLS) network, it is contemplated that these embodiments have applicability to any communication system capable of supporting bandwidth reservation.

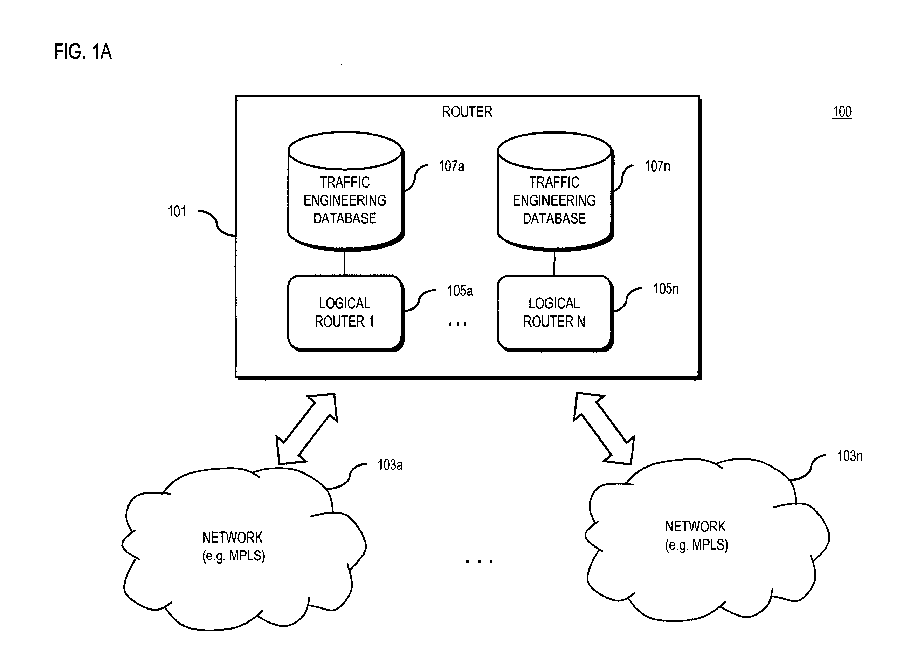

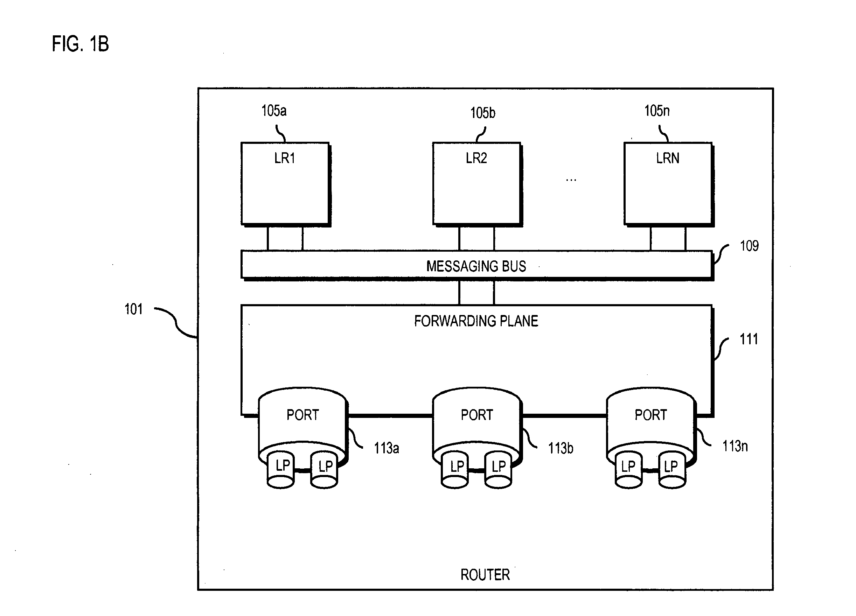

FIGs. 1A and 1B are, respectively, a diagram of a system capable of providing link sharing among logical routers, and a diagram of a physical router implementing multiple logical routers, according to various exemplary embodiments. A communication system 100 includes a networking device 101, such as a router (or routing platform) that provides connectivity between the one or more networks 103a-103n. The router 101 comprises multiple logical routers 105a-105n with corresponding traffic engineering databases 107a-107n; the logical routers 105a-105n may be Software Logical Routers (SLRs) or Hardware Logical Routers (HLRs). The logical routers 105a-105n in a sense are similar to physical routers in that they possess their own set of hardware and software resources (e.g., processors, line cards, configuration, interfaces, and protocols). By way of example, the networks 103a-103n can be Multi Protocol Label Switching (MPLS) networks. MPLS provides for efficient transport of traffic flows between different hardware platforms as well as different applications. Traffic engineering, within an MPLS network, is provided through the use of label switched paths (LSPs), which are created independently based on user-defined policies.

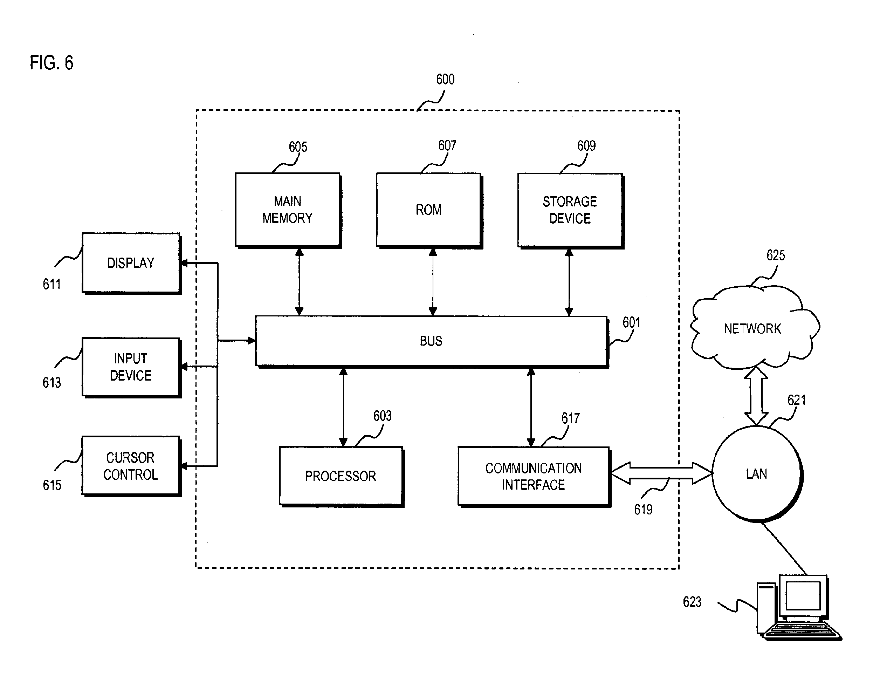

Data transmission over an MPLS system involves the establishment of label-switched paths (LSPs), which are a sequence of labels stemming from every node within the communication path from a source node to a destination node. Resource Reservation Protocol (RSVP) or label distribution protocol (LDP) can be used to distribute the labels. With respect to an Internet Protocol (IP)-based network MPLS can map IP addresses to fixed-length labels for processing by packet-forwarding or packet-switching platforms. MPLS, which is independent of Layer 2 and Layer 3 protocols, can support a variety of protocols. Accordingly, these networks 103a-103n may further utilize network elements employing a host of technologies, including Gigabit Ethernet, frame relay, Asynchronous Transfer Mode (ATM), Fiber Distributed Data Interface (FDDI), synchronous optical network (SONET), etc. The router 101 operates at the physical layer, link layer and network layer of the Open Systems Interconnection (OSI) model to transport data across the network 100. In general, the router 101 can determine the "best" paths or routes by utilizing various routing protocols. Routing tables are maintained by each router for mapping input ports to output ports using information from routing protocols. Exemplary routing protocols include Border Gateway Protocol (BGP), Interior Gateway Routing Protocol (IGRP), Routing Information Protocol (RIP), Open Shortest Path First (OSPF), and Intermediate System to Intermediate System (IS-IS). In addition to intelligently forwarding data, the router 101 can provide various other functions, such as firewalling, encryption, etc. It is noted that the label distribution can also involve piggybacking on the BGP or OSPF routing protocols. The router functions can be performed using a general purpose computer (e.g., as shown in FIG. 6), or be highly specialized hardware platform with greater processing capability to process high volumes of data and hardware redundancies to ensure high reliability. The logical routers 105a-105n can work independently with any of the above internetworking protocols.

As seen in FIG. 1B, the router 101 includes a messaging bus 109 for permitting the exchange of messages between the logical routers 105a-105n and a shared forwarding plane 111. A forwarding plane 111 couples to one or more ports 113a-113n to process packets received over these ports 113a-113n by determining addressing information for destination nodes or devices. Additionally, these ports 113a-113n can provide multiple logical ports. The forwarding plane 111 uses a forwarding table to determine a communication path to the destination node. The forwarding table entries are populated by the Forwarding Information Base entries received from the plurality of logical routers based on the routing tables contained therein. In typical hardware logical router implementations, hardware resources are dedicated to each logical router. Hardware separated logical routers could also share logical interfaces as well. However, in some software logical router implementations, no such dedication of physical resources to each logical router is required. As such, separate logical routers can share the same physical network port, with separation occurring at Layer 2 via Ethernet VLANs (virtual local area networks), ATM VCCs (Asynchronous Transfer Mode Virtual Channel Connections), Frame Relay DLCIs (data link connections), etc. However, since the separation is at Layer 2, traffic engineering becomes more complicated since each Layer 2 logical channel could utilize the entire capacity of the port (e.g., port 113a). In situations where each logical router is forwarding large volumes of traffic across their individual logical port, congestion and packet loss can occur. As MPLS traffic engineering has no mechanism for representing congestion and packet loss in the traffic engineering information distributed to the network, traditionally each logical router would have no knowledge regarding whether the sum of all of the logical routers' bandwidth reservations could exceed the port capacity.

To address this issue, the router 101 provides a mechanism for indicating to each logical router 105a-105n (and therefore to each logical network) the amount of capacity available on a shared port; in this manner, the router 101 can ensure that the sum of all of the logical routers' bandwidth reservations would not exceed available capacity.

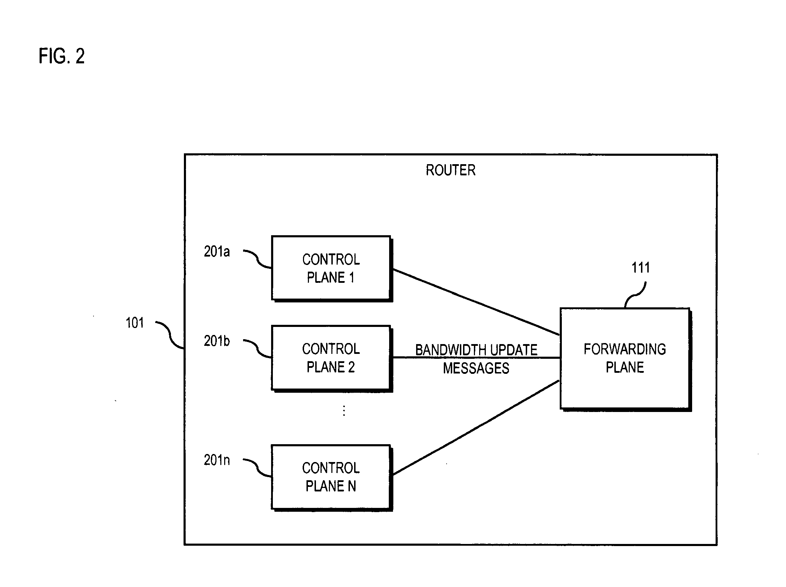

FIG. 2 is a diagram of a router including multiple control planes utilizing a common forwarding plane, according to an exemplary embodiment. For the purposes of illustration, the logical routers 105a-105n are described in a Traffic-Engineered (TE) Multiprotocol Label Switching (MPLS) environment. As described, the router 101 includes forwarding plane hardware 111 that is shared by two or more logical routing entities, i.e., logical routers 105a-105n. Traditionally, routers utilize a single control-plane entity and a single forwarding plane entity. In order to avoid the use of multiple, often under-utilized physical routers to perform differing routing functions or services, a N:1 relationship is established among control plane entities 201a-201n and the forwarding plane 111. This arrangement allows a single routing platform to appear as multiple logical routing platforms to the network 100. Consequently, the sharing of a single hardware platform among several routing functions or services can be achieved. The approach of router 101 involves a bandwidth update message exchange between the forwarding plane 111 and the control planes 201a-201n. In one embodiment, the mechanism for exchanging such capacity information is locally implemented, thereby requiring no protocol exchange between the logical routers 105a-105n.

It is recognized that interior gateway protocols, such as Open Shortest Path First (OSPF) and Intermediate System to Intermediate System (IS-IS), have been extended to support the distribution of Traffic Engineering information so that appropriate Traffic-Engineered Label Switched Paths (LSPs) can be calculated and signaled across an MPLS network. These extensions are specified in Internet Engineering Task Force (IETF) Request for Comment (RFC) 3630 and RFC 3784, for OSPF and IS-IS, respectively. In these RFCs, Sub-TLVs (Type-Length-Values) have been defined to identify the link in question, color or administrative group of the link, the link's Maximum Bandwidth, the link's (Maximum) Reservable Bandwidth, the link's Unreserved Bandwidth and the link's TE-metric or cost.

This information can be distributed throughout the network for all links so that each router in the network is aware of the entire topology of the network. As LSPs are signaled using this information and bandwidth is reserved, the routers in the LSP path update the Unreserved Bandwidth (UnRsvBW) value and send this updated information out to the other routers in the network. Accordingly, any ingress label switch router can determine where to place future LSPs based on lowest metric cost and bandwidth availability.

Conventional implementations of traffic engineering in a multiple logical router environment operate in a "ships-in-the-night" mode. As such, the above process occurs without regard to any other logical routers using the same port. Assuming router 101 is configured to operate in this conventional mode of operation, Logical Router 1 would reserve a certain amount of bandwidth, "X", on a logical or physical port. In this scenario, the rest of the LR1 network would be aware of the bandwidth change because of the UnRsvBW Sub-TLV field, but no other LRs (e.g., LR2 ... LRN) on the same physical platform would be notified of the bandwidth reservation (much less the other routers in the non-LR1 network). As a result, the other networks may consider this link as a viable candidate for LSP placement even though it now has an available bandwidth that is less (i.e., MaxBW - X). Hence, a mechanism is needed to alert all the local LRs that are sharing a port (that the capacity has now changed), so that these LRs can update their Traffic Engineering Databases (TED) and router neighbors.

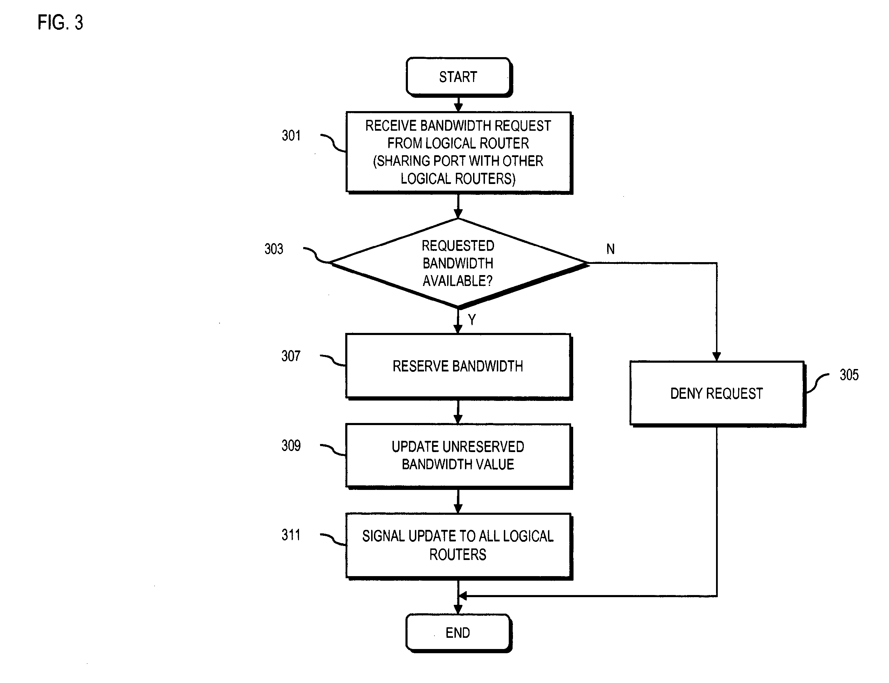

FIG. 3 is a flowchart of a process for reserving bandwidth of a shared port among multiple logical routers, according to an exemplary embodiment. In step 301, a bandwidth request is received from one of the logical routers that share a common port; in this example, it is assumed that control plane 201a corresponds to the requesting logical router (e.g., LR 105a). When an LSP is signaled, the routers in the path confirm the availability of the bandwidth required to satisfy the reservation request and either approve or deny the request. If the request is approved, the control plane 201a passes the appropriate configuration information to the forwarding plane 111 to setup the label switch and to provision the forwarding plane traffic management functions as needed.

According to one embodiment, the forwarding plane 111 confirms the bandwidth reservation not only to the requesting logical router 105a, but to all logical routers 105b-105n sharing the particular port. This confirmation will indicate whether the requested bandwidth is available (as in step 303). If the bandwidth is unavailable, the request is denied (step 305). This determination of available bandwidth can be executed according to a predetermined rule or policy. For instance, the rule or policy may require that each logical router 105a-105n be able to access some minimal amount of bandwidth at all times.

If bandwidth is available, the requested bandwidth is reserved, per step 307. With this information, each logical router updates, as in step 309, their corresponding traffic engineering databases (e.g., TEDs 107a-107n of FIG. 1), which are associated with the links on the shared port. In one embodiment, the reserved bandwidth is subtracted from the UnRsvBW value to yield a current UnRsvBW value (step 309). The logical routers 105a-105n that share the port can be notified of this new UnRsvBW value via bandwidth update messages (e.g., using IGP-TE updates), per step 311. As this value is provided to all the other logical routers 105b-105n in the network, the entire network now has an accurate view of the amount of useable bandwidth available on the shared ports. It is noted that the other logical routers 105b-105n sharing the port will not know why the bandwidth is no longer available; however, this information is not necessary. These logical routers 105b-105n simply need to be informed by the forwarding plane 111 that the bandwidth is no longer available, so they can appropriately reduce their UnRsvBW values.

The result of this approach, according to certain embodiments, is that, assuming no oversubscription on all logical ports shared on a single physical port, no packet loss will ever occur resulting from the inadvertent reservation of too much bandwidth on the shared port. In the case where the logical ports are oversubscribed, and therefore reporting to the TED more available bandwidth than the port can carry, packet loss can still result from the reservation of too much bandwidth on the shared port. However, the problem is mitigated to some extent by the sharing of the forwarding plane bandwidth reservation knowledge among the logical routers.

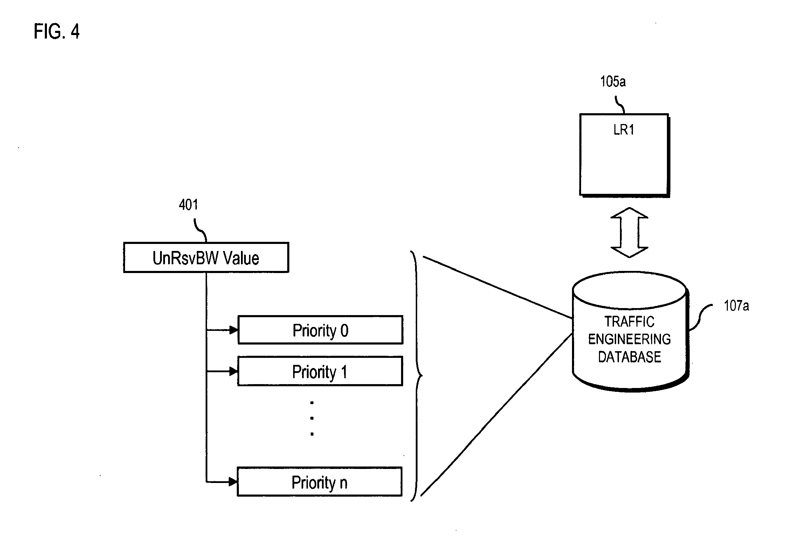

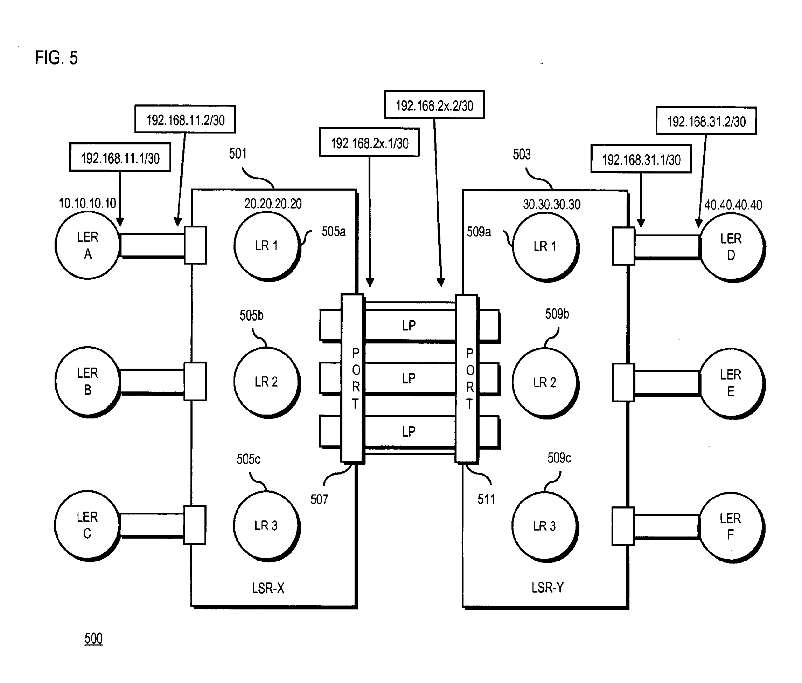

FIG. 4 is a diagram of a traffic engineering database for storing unreserved bandwidth values, according to an exemplary embodiment. In this example, the TED 107a employs a field 401 for indicating an aggregate bandwidth value pertaining to the shared port or link. This field 401 can be the UnRsvBW value defined in RFC 3630 and RFC 3784. It is contemplated that this field 401 can be defined to reflect any type of capacity or network resource. Moreover, as seen, the UnRsvBW value can be structured based on priority levels 0...n, which can map to predetermined quality of service (Qos) levels. This concept is further detailed in the example of FIG. 5.

FIG. 5 is a diagram of an exemplary routing system, according to an exemplary embodiment. In communication system 500, two physical routers 501, 503 are linked to provide connectivity to various routers, LER A - LER F. MPLS defines label edge routers (LERs), which operate at the edge of the MPLS network, and label switch routers (LSRs), which operate within the core of the network. LERs can interface with various dissimilar networks, such as ATM, frame relay, Ethernet (e.g., 1, 10, or 100 Gigabit Ethernet), or optical systems (e.g., using Optical Carrier (OC)-768). For the purposes of explanation, these two physical routers 501, 503, which are also denoted "LSR-X" and "LSR-Y", respectively, each provide multiple logical routers. Specifically, router 501 includes logical routers 505a-505c sharing a single physical port 507, which in an exemplary embodiment, is a 10GbE (Ten-Gigabit Ethernet) port. As for router 503 (i.e., LSR-Y), this router similarly comprises three logical routers 509a-509c, which share a common port 511. In this example, it is assumed that each LR has set oversubscription factor to 100%, or 1. Prior to LSP establishment, the Logical Routers' Traffic Engineering Databases (TEDs) for the shared port in LSR X store the information enumerated in Table 1:

**Table 1**

| | | **LSR X, LR1** | **LSR X, LR2** | **LSR X, LR3** |
|---|---|---|---|---|
| Link Type (Linktype) | | 2 | 2 | 2 |
| Link Identifier (LinkID) | | 192.168.21.1 | 192.168.22.1 | 192.168.23.1 |
| Local Address (LocIfAdr) | | 192.168.21.1 | 192.168.22.1 | 192.168.23.1 |
| Remote Address (RemIfAdr) | | 0.0.0.0 | 0.0.0.0 | 0.0.0.0 |
| Traffic Engineering Metric (TEMetric) | | 10 | 200 | 3000 |
| Maximum Bandwidth (MaxBW) | | 10000 Mbps | 10000 Mbps | 10000 Mbps |
| Maximum Reserved Bandwidth (MaxRsvBW) | | 10000 Mbps | 10000 Mbps | 10000 Mbps |
| Unreserved Bandwidth (UnRsvBW) | | | | |
| | Pri0 | 10000 Mbps | 10000 Mbps | 10000 Mbps |
| | Pri1 | 10000 Mbps | 10000 Mbps | 10000 Mbps |
| | Pri2 | 10000 Mbps | 10000 Mbps | 10000 Mbps |
| | Pri3 | 10000 Mbps | 10000 Mbps | 10000Mbps |
| | Pri4 | 10000 Mbps | 10000 Mbps | 10000 Mbps |
| | Pri5 | 10000 Mbps | 10000 Mbps | 10000 Mbps |
| | Pri6 | 10000 Mbps | 10000 Mbps | 10000 Mbps |
| | Pri7 | 10000 Mbps | 10000 Mbps | 10000 Mbps |
| Color | | 0x0001 | 0x0002 | 0x0004 |

It is assumed that ingress Label Switch Router (LER A) sends a PATH message to LR1 with the information specified in Table 2:

**Table 2**

| |
|---|
| RSVP PATH 10.10.10.10->40.40.40.40 |
| Hop = 192.168.11.1 |
| SrcRoute = 192.168.11.2 Strict, 192.168.21.2 Strict, 192.168.31.2 Strict |
| Tspec = rate: 1000Mbps, size: 1000Mbps, peak: Infinite, min_pol_unit: 20, max packet |
| size: 1500 |
| ADspec = MTU:1500 |
| RecRoute = 192.168.11.1 |
| |

LR1 checks to determine whether 1000 Mbps is available by comparing that rate against its own UnRsvBW value. Since bandwidth is available, LSR-X LR1 (505a) sends the PATH message down the path to LSR-Y LR1 (509a), and transmits a RESV message back to LER A. Unlike conventional approaches, the UnRsvBW values of all logical routers using the common port are decremented by the 1000 Mbps reservation. The resultant TEDs is illustrated in Table 3 as follows:

**Table 3**

| | | **LSR X, LR1** | **LSR X, LR2** | **LSR X, LR3** |
|---|---|---|---|---|
| Linktype | | 2 | 2 | 2 |
| LinkID | | 192.168.21.1 | 192.168.22.1 | 192.168.23.1 |
| LocIfAdr | | 192.168.21.1 | 192.168.22.1 | 192.168.23.1 |
| RemIfAdr | | 0.0.0.0 | 0.0.0.0 | 0.0.0.0 |
| TEMetric | | 10 | 200 | 3000 |
| MaxBW | | 10000Mbps | 10000Mbps | 10000Mbps |
| MaxRsvBW | | 10000Mbps | 10000Mbps | 10000Mbps |
| UnRsvBW | | | | |
| | Pri0 | 9000 Mbps | 9000 Mbps | 9000 Mbps |
| | Pri1 | 9000 Mbps | 9000 Mbps | 9000 Mbps |
| | Pri2 | 9000 Mbps | 9000 Mbps | 9000 Mbps |
| | Pri3 | 9000 Mbps | 9000 Mbps | 9000 Mbps |
| | Pri4 | 9000 Mbps | 9000 Mbps | 9000 Mbps |
| | Pri5 | 9000 Mbps | 9000 Mbps | 9000 Mbps |
| | Pri6 | 9000 Mbps | 9000 Mbps | 9000 Mbps |
| | Pri7 | 9000 Mbps | 9000 Mbps | 9000 Mbps |
| Color | | 0x0001 | 0x0002 | 0x0004 |

It is noted that even though LSR-X LR-2 (505b) and LSR-X LR-3 (505c) have no LSPs signaled through them, they too have 900Mbps of UnRsvBW remaining. As such, all three LSR-X logical routers 505a-505c send Link State Advertisement Updates to their peers about the change in UnRsvBW. Upon receiving the update from LSR-X LR-2 (505b), if LER-B needed to signal a 9500 Mbps LSP, the LER-B would know not to use the port 507 shared by LSR X LRs 1-3 (505a-505c). Subsequently, the LER-B has to find an alternate path in the network.

According to certain embodiments, system 500 can properly insulate one network (e.g., LER A) from changes on another network (LER B). As LSP changes within the LR-1 served network (LER A) occur, control plane updates are initiated within the other networks as well. One approach of limiting the impact of one network on another is to periodically send Link State Advertisement Updates containing aggregated UnRsvBW changes not directly caused by LSP signaling within the LR's network. The periodicity of the LSA Updates could be determined by a configurable timer value and/or a threshold crossing for a configurable magnitude of the aggregated UnRsvBW changes. For example, if LSPs are signaled in LR-1 network, the LSA updates would occur immediately within the LR-1 network; however, LR-2 and LR-3 networks could delay propagating the updates for a period of time to lessen the impact of high levels of LR-1 network changes.

Although the example above scenario does not account for QoS or priority levels, it is contemplated that the processes described can apply equally to the signaling of bandwidths associated with the priorities of LSPs (e.g., 8 priority levels). The UnRsvBW values would be updated in the appropriate priorities and propagated throughout the network (as depicted in FIG. 4).

The processes described herein for providing link sharing among logical routers may be implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

FIG. 6 illustrates computing hardware (e.g., computer system) upon which an embodiment according to the invention can be implemented. The computer system 600 includes a bus 601 or other communication mechanism for communicating information and a processor 603 coupled to the bus 601 for processing information. The computer system 600 also includes main memory 605, such as random access memory (RAM) or other dynamic storage device, coupled to the bus 601 for storing information and instructions to be executed by the processor 603. Main memory 605 also can be used for storing temporary variables or other intermediate information during execution of instructions by the processor 603. The computer system 600 may further include a read only memory (ROM) 607 or other static storage device coupled to the bus 601 for storing static information and instructions for the processor 603. A storage device 609, such as a magnetic disk or optical disk, is coupled to the bus 601 for persistently storing information and instructions.

The computer system 600 may be coupled via the bus 601 to a display 611, such as a cathode ray tube (CRT), liquid crystal display, active matrix display, or plasma display, for displaying information to a computer user. An input device 613, such as a keyboard including alphanumeric and other keys, is coupled to the bus 601 for communicating information and command selections to the processor 603. Another type of user input device is a cursor control 615, such as a mouse, a trackball, or cursor direction keys, for communicating direction information and command selections to the processor 603 and for controlling cursor movement on the display 611.

According to an embodiment of the invention, the processes described herein are performed by the computer system 600, in response to the processor 603 executing an arrangement of instructions contained in main memory 605. Such instructions can be read into main memory 605 from another computer-readable medium, such as the storage device 609. Execution of the arrangement of instructions contained in main memory 605 causes the processor 603 to perform the process steps described herein. One or more processors in a multi-processing arrangement may also be employed to execute the instructions contained in main memory 605. In alternative embodiments, hard-wired circuitry may be used in place of or in combination with software instructions to implement the embodiment of the invention. Thus, embodiments of the invention are not limited to any specific combination of hardware circuitry and software.

The computer system 600 also includes a communication interface 617 coupled to bus 601. The communication interface 617 provides a two-way data communication coupling to a network link 619 connected to a local network 621. For example, the communication interface 617 may be a digital subscriber line (DSL) card or modem, an integrated services digital network (ISDN) card, a cable modem, a telephone modem, or any other communication interface to provide a data communication connection to a corresponding type of communication line. As another example, communication interface 617 may be a local area network (LAN) card (e.g. for Ethernet™ or an Asynchronous Transfer Model (ATM) network) to provide a data communication connection to a compatible LAN. Wireless links can also be implemented. In any such implementation, communication interface 617 sends and receives electrical, electromagnetic, or optical signals that carry digital data streams representing various types of information. Further, the communication interface 617 can include peripheral interface devices, such as a Universal Serial Bus (USB) interface, a PCMCIA (Personal Computer Memory Card International Association) interface, etc. Although a single communication interface 617 is depicted in FIG. 6, multiple communication interfaces can also be employed.

The network link 619 typically provides data communication through one or more networks to other data devices. For example, the network link 619 may provide a connection through local network 621 to a host computer 623, which has connectivity to a network 625 (e.g. a wide area network (WAN) or the global packet data communication network now commonly referred to as the "Internet") or to data equipment operated by a service provider. The local network 621 and the network 625 both use electrical, electromagnetic, or optical signals to convey information and instructions. The signals through the various networks and the signals on the network link 619 and through the communication interface 617, which communicate digital data with the computer system 600, are exemplary forms of carrier waves bearing the information and instructions.

The computer system 600 can send messages and receive data, including program code, through the network(s), the network link 619, and the communication interface 617. In the Internet example, a server (not shown) might transmit requested code belonging to an application program for implementing an embodiment of the invention through the network 625, the local network 621 and the communication interface 617. The processor 603 may execute the transmitted code while being received and/or store the code in the storage device 609, or other non-volatile storage for later execution. In this manner, the computer system 600 may obtain application code in the form of a carrier wave.

The term "computer-readable medium" as used herein refers to any medium that participates in providing instructions to the processor 603 for execution. Such a medium may take many forms, including but not limited to non-volatile media, volatile media, and transmission media. Non-volatile media include, for example, optical or magnetic disks, such as the storage device 609. Volatile media include dynamic memory, such as main memory 605. Transmission media include coaxial cables, copper wire and fiber optics, including the wires that comprise the bus 601. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the embodiments of the invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

## Claims

1. A method comprising:
receiving a request from one (105a) of a plurality of logical routers for reserving bandwidth corresponding to a port shared by the logical routers; and
confirming reservation of the bandwidth within a forwarding plane (111) before granting the request to the one logical router (105a) ; wherein the forwarding plane (111) confirms the bandwidth reservation to all logical routers (105a - 105n) sharing the particular port.

2. A method of claim 1, further comprising:
notifying, by the forwarding plane, other ones of the logical routers (105b - 105n) of unreserved bandwidth.

3. A method of claim 1, wherein each of the logical routers (105b - 105n) is configured to modify an unreserved bandwidth value based on the reserved bandwidth.

4. A method of claim 3, wherein each of the logical routers is further configured to maintain a traffic engineering database (107a - 107n), and to update a corresponding traffic engineering database (107a - 107n) with the modified unreserved bandwidth value.

5. A method of claim 1, wherein the unreserved bandwidth value is assigned to a plurality of priority levels or a plurality of quality of service (QoS) levels.

6. A method of claim 1, further comprising:
signaling a label switched path based on the reserved bandwidth over the port to a multiprotocol label switching (MPLS) network.

7. A method of claim 1, wherein the port is either a Gigabit Ethernet port, a 10 Gigabit Ethernet port, a 100 Gigabit Ethernet port, or an Optical Carrier (OC)-768 port.

8. An apparatus comprising:
a control plane configured to receive a request from one (105a) of a plurality of logical routers for reserving bandwidth corresponding to a port shared by the logical routers (105a -105n); and
a forwarding plane (111) configured to confirm reservation of the bandwidth before granting the request to the one logical router (105a); wherein the forwarding plane (111) is configured to confirm the bandwidth reservation to all logical routers (105a - 105n) sharing the particular port.

9. An apparatus of claim 8, wherein the forwarding plane (111) is further configured to notify other ones of the logical routers (105b - 105n) of unreserved bandwidth.

10. An apparatus of claim 8, wherein each of the logical routers (105a - 105n) is configured to modify an unreserved bandwidth value based on the reserved bandwidth.

11. An apparatus of claim 10, wherein each of the logical routers (105a - 105n) is further configured to maintain a traffic engineering database (107a - 107n), and to update a corresponding traffic engineering database (107a - 107n) with the modified unreserved bandwidth value.

12. An apparatus of claim 8, wherein the unreserved bandwidth value is assigned to a plurality of priority levels or a plurality of quality of service (QoS) levels.

13. An apparatus of claim 8, wherein the forwarding plane (111) is further configured to signal a label switched path based on the reserved bandwidth over the port to a multiprotocol label switching (MPLS) network.

14. An apparatus of claim 8, wherein the port is either a Gigabit Ethernet port, a 10 Gigabit Ethernet port, a 100 Gigabit Ethernet port, or an Optical Carrier (OC)-768 port.

15. A routing platform comprising:
a plurality of logical routers (105a - 105n) configured to share a port, wherein one (105a) of the logical routers is configured to generate a request for reserving bandwidth corresponding to the port;
a plurality of control planes corresponding to the logical routers (105a - 105n), wherein the control planes are configured to execute a routing protocol; and
a forwarding plane (111) coupled to the control planes and configured to confirm reservation of the bandwidth within the forwarding plane (111) before granting the request to the one logical router (105a), wherein the forwarding plane (111) is configured to confirm the bandwidth reservation to all logical routers (105a - 105n) sharing the particular port.

16. An routing platform of claim 15, wherein the forwarding plane (111) is further configured to notify other ones of the logical routers (105b - 105n) of unreserved bandwidth.

17. A routing platform of claim 15, wherein each of the logical routers (105a - 105n) is configured to modify an unreserved bandwidth value based on the reserved bandwidth.

18. A routing platform of claim 16, wherein each of the logical routers (105a - 105n) is further configured to maintain a traffic engineering database (107a - 107n), and to update a corresponding traffic engineering database (107a - 107n) with the modified unreserved bandwidth value.

19. A routing platform of claim 15, wherein the forwarding plane (111) is configured to notify the control planes of the modified unreserved bandwidth value.

20. A routing platform of claim 15, wherein the unreserved bandwidth value is assigned to a plurality of priority levels or a plurality of quality of service (QoS) levels.

21. A routing platform of claim 15, wherein the forwarding plane (111) is further configured to signal a label switched path based on the reserved bandwidth over the port to a multiprotocol label switching (MPLS) network.

22. A routing platform of claim 15, wherein the port is either a Gigabit Ethernet port, a 10 Gigabit Ethernet port, a 100 Gigabit Ethernet port, or an Optical Carrier (OC)-768 port.

23. A routing platform of claim 15, wherein the forwarding (111) plane enforces a policy that ensures a predetermined amount of bandwidth corresponding to the port is designated for each of the logical routers (105a - 105n).

## Patentansprüche

1. Verfahren, das umfasst:
Empfangen einer Anfrage von einem (105a) aus einer Vielzahl von logischen Routern für das Reservieren von Bandbreite in Entsprechung zu einem gemeinsam durch die logischen Router genutzten Port, und
Bestätigen der Reservierung der Bandbreite in einer Weiterleitungsebene (111) vor dem Gewähren der Anfrage für den einen logischen Router (105a), wobei die Weiterleitungsebene (111) die Bandbreitenreservierung für alle diesen Port gemeinsam nutzenden logischen Router (105a - 105n) bestätigt.

2. Verfahren nach Anspruch 1, das weiterhin umfasst:
Benachrichtigen, durch die Weiterleitungsebene, von anderen der logischen Routern (105b - 105n) bezüglich der nicht reservierten Bandbreite.

3. Verfahren nach Anspruch 1, wobei jeder der logischen Router (105b - 105n) konfiguriert ist, um einen nicht-reservierte-Bandbreite-Wert basierend auf der reservierten Bandbreite zu modifizieren.

4. Verfahren nach Anspruch 3, wobei jeder der logischen Router weiterhin konfiguriert ist, um eine Traffic-Engineering-Datenbank (107a - 107n) aufrechtzuerhalten und um eine entsprechende Traffic-Engineering-Datenbank (107a - 107n) mit dem modifizierten nichtreservierte-Bandbreite-Wert zu aktualisieren.

5. Verfahren nach Anspruch 1, wobei der nicht-reservierte-Bandbreite-Wert einer Vielzahl von Prioritätsebenen oder einer Vielzahl von Dienstgüte (QoS)-Ebenen zugewiesen wird.

6. Verfahren nach Anspruch 1, das weiterhin umfasst:
Signalisieren eines Label-geswitchten Pfads basierend auf der reservierten Bandbreite über den Port an ein Multiprotocol-Label-Switching (MPLS)-Netzwerk.

7. Verfahren nach Anspruch 1, wobei der Port ein Gigabit-Ethernet-Port, ein 10-Gigabit-Ethernet-Port, ein 100-Gigabit-Ethernet-Port oder ein Optical-Carrier (OC)-768-Port ist.

8. Vorrichtung, die umfasst:
eine Steuerebene, die konfiguriert ist, um eine Anfrage von einem (105a) aus einer Vielzahl von logischen Routern für das Reservieren von Bandbreite in Entsprechung zu einem gemeinsam durch die logischen Router (105a - 105n) genutzten Port zu empfangen, und
eine Weiterleitungsebene (111), die konfiguriert ist, um die Reservierung der Bandbreite vor dem Gewähren der Anfrage für den einen logischen Router (105a) zu bestätigen, wobei die Weiterleitungsebene (111) konfiguriert ist, um die Bandbreitenreservierung für alle diesen Port gemeinsam nutzenden logischen Router (105a - 105n) zu bestätigen.

9. Vorrichtung nach Anspruch 8, wobei die Weiterleitungsebene (111) weiterhin konfiguriert ist, um andere der logischen Router (105b - 105n) bezüglich der nicht reservierten Bandbreite zu benachrichtigen.

10. Vorrichtung nach Anspruch 8, wobei jeder der logischen Router (105a - 105n) konfiguriert ist, um einen nicht-reservierte-Bandbreite-Wert basierend auf der reservierten Bandbreite zu modifizieren.

11. Vorrichtung nach Anspruch 10, wobei jeder der logischen Router (105a - 105n) weiterhin konfiguriert ist, um eine Traffic-Engineering-Datenbank (107a - 107n) aufrechtzuerhalten und um eine entsprechende Traffic-Engineering-Datenbank (107a - 107n) mit dem modifizierten nicht-reservierte-Bandbreite-Wert zu aktualisieren.

12. Vorrichtung nach Anspruch 8, wobei der nicht-reservierte-Bandbreite-Wert einer Vielzahl von Prioritätsebenen oder einer Vielzahl von Dienstgüte (QoS)-Ebenen zugewiesen wird.

13. Vorrichtung nach Anspruch 8, wobei die Weiterleitungsebene (111) weiterhin konfiguriert ist, um einen Label-geswitchten Pfad basierend auf der reservierten Bandbreite über den Port an ein Multiprotocol-Label-Switching (MPLS)-Netzwerk zu signalisieren.

14. Vorrichtung nach Anspruch 8, wobei der Port ein Gigabit-Ethernet-Port, ein 10-Gigabit-Ethernet-Port, ein 100-Gigabit-Ethernet-Port oder ein Optical-Carrier (OC)-768-Port ist.

15. Routing-Plattform, die umfasst:
eine Vielzahl von logischen Routern (105a - 105n), die konfiguriert sind, um einen Port gemeinsam zu nutzen, wobei einer (105a) der logischen Router konfiguriert ist, um eine Anfrage für das Reservieren von Bandbreite in Entsprechung zu dem Port zu erzeugen, eine Vielzahl von Steuerebenen in Entsprechung zu den logischen Routern (105a-105n), wobei die Steuerebenen konfiguriert sind, um ein Routing-Protokoll auszuführen, und
eine Weiterleitungsebene (111), die mit den Steuerebenen gekoppelt ist und konfiguriert ist, um eine Reservierung der Bandbreite in der Weiterleitungsebene (111) vor dem Gewähren der Anfrage für den einen logischen Router (105a) zu bestätigen, wobei die Weiterleitungsebene (111) konfiguriert ist, um die Bandbreitenreservierung für alle diesen Port gemeinsam nutzenden logischen Router (105a - 105n) zu bestätigen.

16. Routing-Plattform nach Anspruch 15, wobei die Weiterleitungsebene (111) weiterhin konfiguriert ist, um andere der logischen Router (105b - 105n) bezüglich der nicht reservierten Bandbreite zu benachrichtigen.

17. Routing-Plattform nach Anspruch 15, wobei jeder der logischen Router (105a - 105n) konfiguriert ist, um einen nicht-reservierte-Bandbreite-Wert basierend auf der reservierten Bandbreite zu modifizieren.

18. Routing-Plattform nach Anspruch 16, wobei jeder der logischen Router (105a - 105n) weiterhin konfiguriert ist, um eine Traffic-Engineering-Datenbank (107a - 107n) aufrechtzuerhalten und um eine entsprechende Traffic-Engineering-Datenbank (107a - 107n) mit dem modifizierten nicht-reservierte-Bandbreite-Wert zu aktualisieren.

19. Routing-Plattform nach Anspruch 15, wobei die Weiterleitungsebene (111) konfiguriert ist, um die Steuerebenen bezüglich des modifizierten nicht-reservierte-Bandbreite-Werts zu benachrichtigen.

20. Routing-Plattform nach Anspruch 15, wobei der nicht-reservierte-Bandbreite-Wert einer Vielzahl von Prioritätsebenen oder einer Vielzahl von Dienstgüte (QoS)-Ebenen zugewiesen wird.

21. Routing-Plattform nach Anspruch 15, wobei die Weiterleitungsebene (111) weiterhin konfiguriert ist, um einen Label-geswitchten Pfad basierend auf der reservierten Bandbreite über den Port an ein Multiprotocol-Label-Switching (MPLS)-Netzwerk zu signalisieren.

22. Routing-Plattform nach Anspruch 15, wobei der Port ein Gigabit-Ethernet-Port, ein 10-Gigabit-Ethernet-Port, ein 100-Gigabit-Ethernet-Port oder ein Optical-Carrier (OC)-768-Port ist.

23. Routing-Plattform nach Anspruch 15, wobei die Weiterleitungsebene (111) eine Vorgehensweise erzwingt, die sicherstellt, dass eine vorbestimmte Menge an Bandbreite in Entsprechung zu dem Port für jeden der logischen Router (105a - 105n) designiert wird.

## Revendications

1. Procédé comprenant :
la réception d'une requête provenant d'un routeur logique (105a) parmi une pluralité de routeurs logiques pour réserver une largeur de bande correspondant à un port partagé par les routeurs logiques ; et
la confirmation de la réservation de la largeur de bande dans un plan de transfert (111) avant d'accorder la requête audit routeur logique (105a) ;
dans lequel le plan de transfert (111) confirme la réservation de largeur de bande à tous les routeurs logiques (105a à 105n) qui partagent le port particulier.

2. Procédé selon la revendication 1, comprenant en outre :
la notification, par le plan de transfert, d'autres routeurs logiques (105b à 105n) parmi lesdits routeurs logiques concernant la largeur de bande non réservée.

3. Procédé selon la revendication 1, dans lequel chacun desdits routeurs logiques (105b à 105n) est configuré pour modifier une valeur de largeur de bande non réservée sur base de la largeur de bande réservée.

4. Procédé selon la revendication 3, dans lequel chacun des routeurs logiques est en outre configuré pour maintenir une base de données d'ingénierie de trafic (107a à 107n) et pour mettre à jour une base de données d'ingénierie de trafic correspondante (107a à 107n) avec la valeur de largeur de bande non réservée modifiée.

5. Procédé selon la revendication 1, dans lequel la valeur de largeur de bande non réservée est assignée à une pluralité de niveaux de priorité ou à une pluralité de niveaux de qualité de service (QoS, soit Quality of Service).

6. Procédé selon la revendication 1, comprenant en outre :
la signalisation d'un chemin à étiquette commutée sur base de la largeur de bande réservée via le port à un réseau de commutation d'étiquettes multiprotocole (MPLS, soit MultiProtocol Label Switching).

7. Procédé selon la revendication 1, dans lequel le port est soit un port Ethernet gigabit, un port Ethernet 10 gigabits, un port Ethernet 100 gigabits ou un port optique Optical Carrier (OC)-768.

8. Appareil comprenant :
un plan de contrôle configuré pour recevoir une requête provenant d'un routeur logique (105a) parmi une pluralité de routeurs logiques pour réserver une largeur de bande correspondant à un port partagé par les routeurs logiques (105a à 105n) ; et
un plan de transfert (111) configuré pour confirmer la réservation de la largeur de bande avant d'accorder la requête audit routeur logique (105a) ;
dans lequel le plan de transfert (111) est configuré pour confirmer la réservation de largeur de bande à tous les routeurs logiques (105a à 105n) qui partagent le port particulier.

9. Appareil selon la revendication 8, dans lequel le plan de transfert (111) est en outre configuré pour notifier d'autres routeurs logiques (105b à 105n) parmi lesdits routeurs logiques concernant la largeur de bande non réservée.

10. Appareil selon la revendication 8, dans lequel chacun desdits routeurs logiques (105a à 105n) est configuré pour modifier une valeur de largeur de bande non réservée sur base de la largeur de bande réservée.

11. Appareil selon la revendication 10, dans lequel chacun des routeurs logiques (105a à 105n) est en outre configuré pour maintenir une base de données d'ingénierie de trafic (107a à 107n) et pour mettre à jour une base de données d'ingénierie de trafic correspondante (107a à 107n) avec la valeur de largeur de bande non réservée modifiée.

12. Appareil selon la revendication 8, dans lequel la valeur de largeur de bande non réservée est assignée à une pluralité de niveaux de priorité ou à une pluralité de niveaux de qualité de service (QoS).

13. Appareil selon la revendication 8, dans lequel le plan de transfert (111) est en outre configuré pour signaler un chemin à étiquette commutée sur base de la largeur de bande réservée via le port à un réseau à commutation d'étiquettes multiprotocole (MPLS).

14. Appareil selon la revendication 8, dans lequel le port est soit un port Ethernet gigabit, un port Ethernet 10 gigabits, un port Ethernet 100 gigabits ou un port optique Optical Carrier (OC)-768.

15. Plate-forme de routage comprenant :
une pluralité de routeurs logiques (105a à 105n) configurés pour partager un port, dans laquelle un routeur logique (105a) parmi les routeurs logiques est configuré pour générer une requête pour réserver une largeur de bande correspondant au port ;
une pluralité de plans de contrôle correspondant aux routeurs logiques (105a à 105n), dans laquelle les plans de contrôle sont configurés pour exécuter un protocole de routage ; et
un plan de transfert (111) couplé aux plans de contrôle et configuré pour confirmer la réservation de la largeur de bande dans le plan de transfert (111) avant d'accorder la requête audit routeur logique (105a), dans laquelle le plan de transfert (111) est configuré pour confirmer la réservation de largeur de bande à tous les routeurs logiques (105a à 105n) qui partagent le port particulier.

16. Plate-forme de routage selon la revendication 15, dans laquelle le plan de transfert (111) est en outre configuré pour notifier d'autres routeurs logiques (105b à 105n) parmi lesdits routeurs logiques concernant la largeur de bande non réservée.

17. Plate-forme de routage selon la revendication 15, dans laquelle chacun desdits routeurs logiques (105a à 105n) est configuré pour modifier une valeur de largeur de bande non réservée sur base de la largeur de bande réservée.

18. Plate-forme de routage selon la revendication 16, dans laquelle chacun des routeurs logiques (105a à 105n) est en outre configuré pour maintenir une base de données d'ingénierie de trafic (107a à 107n) et pour mettre à jour une base de données d'ingénierie de trafic correspondante (107a à 107n) avec la valeur de largeur de bande non réservée modifiée.

19. Plate-forme de routage selon la revendication 15, dans laquelle le plan de transfert (111) est configuré pour notifier les plans de contrôle concernant la valeur de largeur de bande non réservée modifiée.

20. Plate-forme de routage selon la revendication 15, dans laquelle la valeur de largeur de bande non réservée est assignée à une pluralité de niveaux de priorité ou à une pluralité de niveaux de qualité de service (QoS).

21. Plate-forme de routage selon la revendication 15, dans laquelle le plan de transfert (111) est en outre configuré pour signaler un chemin à étiquette commutée sur base de la largeur de bande réservée via le port à un réseau de commutation d'étiquettes multiprotocole (MPLS).

22. Plate-forme de routage selon la revendication 15, dans laquelle le port est soit un port Ethernet gigabit, un port Ethernet 10 gigabits, un port Ethernet 100 gigabits ou un port optique Optical Carrier (OC)-768.

23. Plate-forme de routage selon la revendication 15, dans laquelle le plan de transfert (111) applique une politique qui assure qu'une quantité de largeur de bande prédéterminée correspondant au port est désignée pour chacun des routeurs logiques (105a à 105n).
